# EUROPÄISCHE PATENTSCHRIFT

(11) **EP 1 071 343 B1**
(45) Veröffentlichungstag und Bekanntmachung des Hinweises auf die Patenterteilung: **05.11.2003**
(21) Anmeldenummer: 00900480.5
(22) Anmeldetag: 21.01.2000
(51) Int. Cl.: A23N 1/02

(54) **VORRICHTUNG ZUM ZERREISSEN VON FRÜCHTEN**
DEVICE FOR CRUSHING FRUIT
DISPOSITIF DESTINE A DECHIQUETER DES FRUITS

(30) Priorität: 11.02.1999 CH 26099
(43) Veröffentlichungstag der Anmeldung: 31.01.2001
(73) Patentinhaber: Bucher-Guyer AG, 8166 Niederweningen (CH)
(72) Erfinder: HARTMANN, Eduard, CH-5425 Schneisingen (CH)
(86) Internationale Anmeldenummer: CH0000030
(87) Internationale Veröffentlichungsnummer: WO00047066

(56) Entgegenhaltungen:
- CH-A- 249 569
- DE-C- 920 460
- US-A- 4 584 919

## Beschreibung

Die Erfindung betrifft eine Vorrichtung zum Zerreissen von Früchten, umfassend einen Ständer, ein in dem Ständer gelagertes Reissbett mit einer Oberfläche als Laufbahn für die Früchte, welche Reisselemente und neben diesen Durchgänge für die zerkleinerten Früchte aufweist, wobei die Reisselemente mit einer Höhe über die Laufbahn hervorragen, sowie in dem Ständer gelagerte Mittel zur Zuführung der Früchte zum Reissbett und Antriebsmittel zur Erzeugung einer Relativbewegung zwischen den Reisselementen und Zuführmitteln nebst den Früchten.

Eine Trommel-Schneidmaschine, insbesondere zum Schneiden von Zuckerrüben in Schnitzel, ist aus US-A-4,584,919 (Bittner) bekannt. Sie besitzt eine Anzahl von Halteelementen, welche über den Umfang der Trommel in gleichen Abständen angeordnet sind und sich im wesentlichen parallel zur Trommelachse erstrecken. Zwischen je zwei Halteelementen ist ein Messerkasten gehaltert, in dem mindestens ein Schneidmesser befestigt ist, dessen Schneidkante sich im wesentlichen in Umfangsrichtung erstreckt.

Auch zum Zerreissen von Früchten sind schon verschiedene Ausführungsformen von Trommelmühlen dieses Typs bekannt, z.B. die Typen Central von Bucher-Guyer AG, Niederweningen, Schweiz. Eine solche Trommelmühle umfasst einen in einem Stück hergestellten Trommelkörper, über dessen Umfang Halteelemente für die Reissmesser in geringen Abständen angeordnet sind. Im betriebsbereiten Zustand bildet die Trommel einer solchen Mühle einen im wesentlichen geschlossenen Hohlraum mit einer einseitigen axialen Öffnung, durch welche die zu zerreissenden Früchte mittels einer Transportschnecke zugeführt werden.

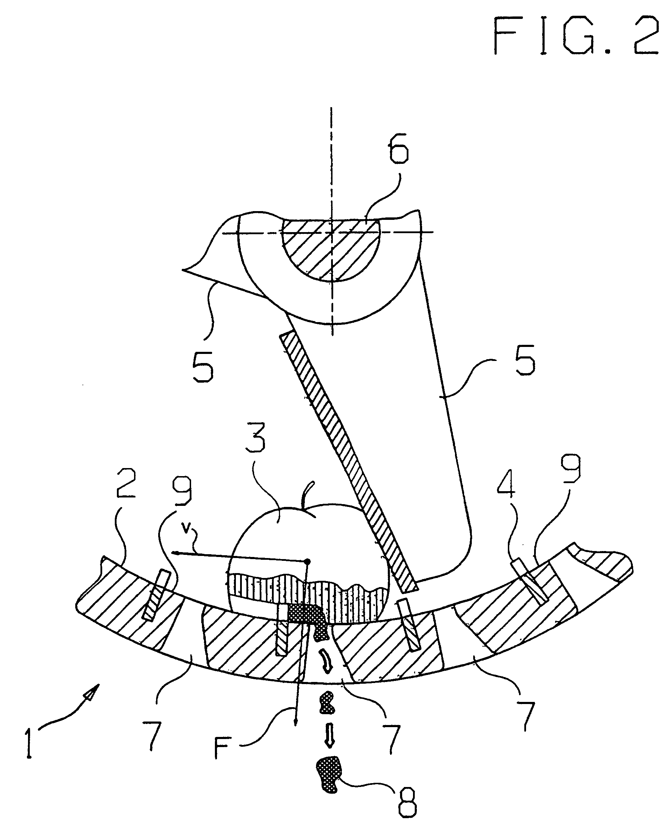

Fig. 2 zeigt in einem Detail das Zerreissen eines Apfels in einer derartigen bekannten Trommelmühle. Hierbei hat das Reissbett die Form einer Trommel 1, auf deren innerer Oberfläche 2 sich die Laufbahn für die Äpfel 3 mit den Reissmessern 4 befindet, welche Fig. 2 in einem Schnitt senkrecht zur Trommelachse zeigt. Die Trommel 1 steht fest, während die Äpfel 3 durch eine nicht gezeigte Schnecke gefördert und durch Flügel 5 eines Rotors 6 mit einer Geschwindigkeit v und einer Zentrifugalkraft F über die Oberfläche 2 mit den Reissmessern 4 geführt werden.

Zwischen je zwei Reissmessern 4 ist ein Durchgang 7 als Abführkanal für die von den Äpfeln 3 abgerissenen zerkleinerten Maischeteile 8 angeordnet. Die Abflusskanäle 7 erstrecken sich axial in einem Abstand 9 parallel zum jeweiligen benachbarten Reissmesser 4. Man erkennt gemäss Fig. 2, dass der Apfel 3 mit grosser Anpresskraft F über die Reissmesser 4 geschoben wird. Bei der bekannten Lage der Abführkanäle 7 müsste theoretisch ein sehr grosses längliches Fruchtfleisch-Teil 8 aus dem Apfel 3 ausbrechen und entgegen der Apfelbewegung v in den Abführkanal 7 gelangen. Dies ist in der Praxis sehr unwahrscheinlich. Ein grosser Teil der Maischeteile 8 wird erfahrungsgemäss über die Reissmesser 4 geschoben und gelangt so zum nachfolgenden Abführkanal 7.

Eine solche unkontrollierte Abführung führt infolge der dabei auftretenden grossen Press- und Reibungskräfte zu einer teilweisen Zerstörung der Maischestruktur. Besonders bei weichem Obst entsteht dadurch ein hoher Feinanteil der Maische, welcher Ausbeute und Leistung bei einer nachfolgenden Entsaftung durch Pressen sehr nachteilig reduziert. Die praktische Erfahrung zeigt, dass auch ein Einsatz von Reissmessern 4 mit sehr grob gezahnter Reisskante diesen Feinanteil kaum verringert.

Der Erfindung liegt die Aufgabe zugrunde, die genannten Nachteile der bekannten Vorrichtungen zum Zerreissen von Früchten durch eine neue Ausbildung zu vermeiden.

Gemäss der Erfindung wird die Lösung dieser Aufgabe bei einer Vorrichtung der eingangs genannten Art dadurch erreicht, dass die Durchgänge im Reissbett für die zerkleinerten Früchte in Richtung der Relativbewegung gesehen vor den Reisselementen in einem Abstand angeordnet sind, welcher kleiner ist, als die Höhe der Reisselemente über der Laufbahn. Sehr vorteilhaft sind Lösungen, bei denen die Durchgänge im Reissbett direkt an die Reisselemente anschliessen. Vorzugsweise sind die Durchgänge in Durchgangsrichtung der zerkleinerten Früchte erweitert. Weitere vorteilhafte Varianten der Vorrichtung sind in den Patentansprüchen gekennzeichnet.

Eine erfindungsgemässe Bauart der Vorrichtung erlaubt ein unbehindertes Ausbrechen und Abstossen der abgerissenen ("abgerätzten") Maischeteilchen 8 aus der Frucht 3 in die Abführkanäle 7. Die Maischeteilchen 8 erfahren keine zusätzlichen Beanspruchungen. Die Bauart erlaubt durch eine wählbare Höhe der messerförmigen Reisselemente über der Laufbahn des Reissbettes eine direkte Beeinflussung der Maischestruktur, und die zerkleinerten Früchte weisen nur sehr geringe Feinanteile auf. Durch die verbesserte Maischeabfuhr mit geringeren Reibungsvorgängen reduziert sich der für die Zerkleinerung mit der Vorrichtung erforderliche Energiebedarf.

Ausführungsbeispiele der Erfindung sind in der folgenden Beschreibung und den Figuren der Zeichnung näher erläutert. Es zeigen:
Fig. 1a und 1b schematische Querschnitte durch eine Reissmühle für Früchte mit einer erfindungsgemässen Vorrichtung,
Fig. 2 ein Detail beim Zerreissen eines Apfels in einer bekannten Trommelmühle im Querschnitt,
Fig. 3 ein Detail beim Zerreissen eines Apfels in einer Trommelmühle mit einer erfindungsgemässen Vorrichtung im Querschnitt,
Fig. 4 eine Variante eines Durchganges durch ein Reissbett einer Trommelmühle gemäss Fig. 1,
Fig. 5 eine andere Variante eines Durchganges durch ein Reissbett einer Trommelmühle gemäss Fig. 1,
Fig. 6 eine weitere Variante eines Durchganges durch ein Reissbett einer Trommelmühle gemäss Fig. 1,
Fig. 7 eine weitere Variante eines Durchganges durch ein Reissbett einer Trommelmühle gemäss Fig. 1,
Fig. 8 ein Schema einer Halterung eines Reissmessers in einer Trommelmühle gemäss Fig. 1, und
Fig. 9 ein Schema einer Variante eines Reissmessers an einem Durchgang durch ein Reissbett einer Trommelmühle gemäss Fig. 1.

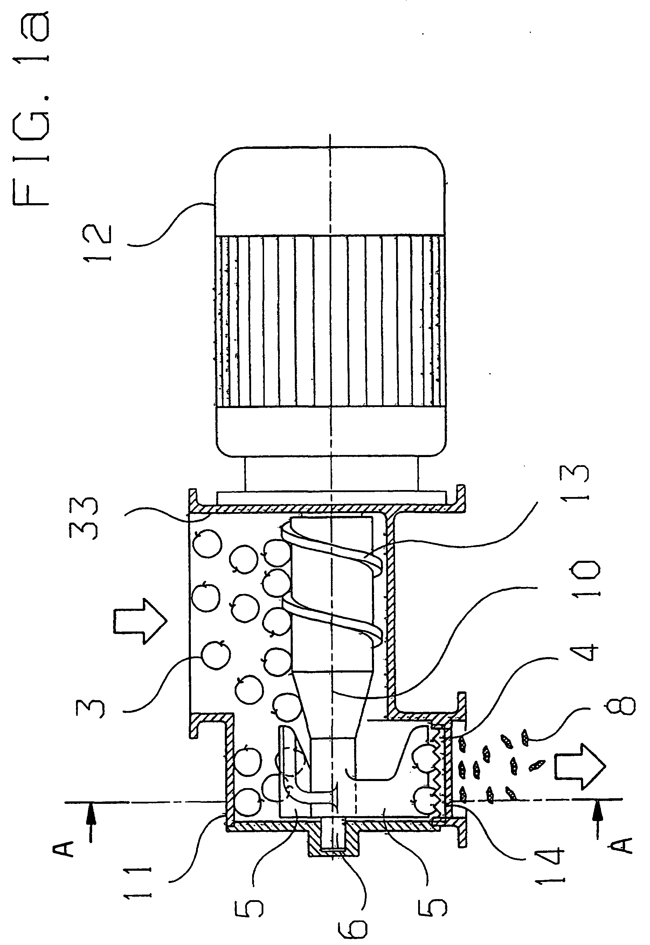

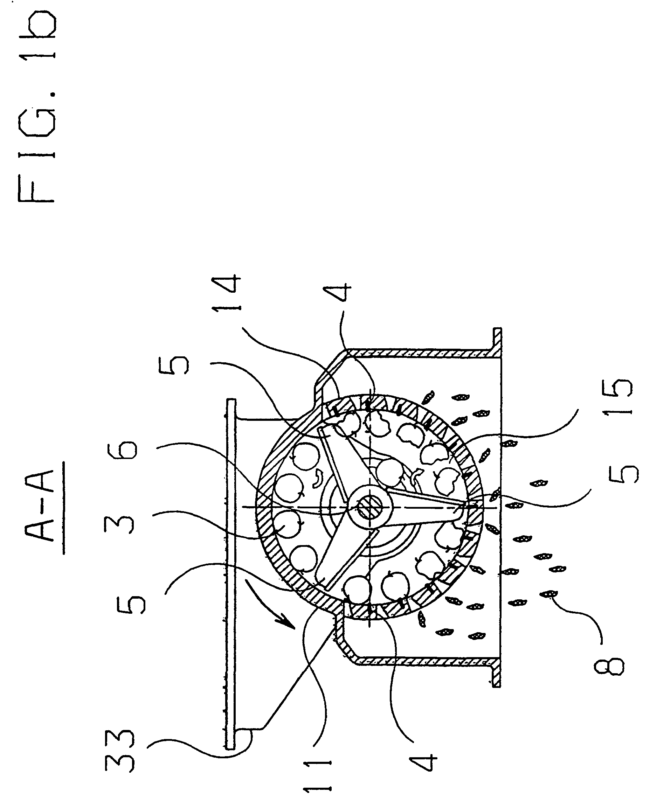

Wie der schematische Querschnitt durch eine Reissmühle für Früchte mit einer erfindungsgemässen Vorrichtung gemäss Fig. 1a zeigt, umfasst diese Reissmühle einen in einem Ständer 11 um eine horizontale Achse 10 drehbar gelagerten Rotor 6 nebst einem Motor 12 zu dessen Antrieb. Der Rotor 6 umfasst in an sich bekannter Art eine Zuführschnecke 13 zum Transport von Obst 3 aus einem Fülltrichter 33 zu einer Trommel 14 als Reissbett. Wie der Schnitt A-A gemäss Fig. 1b noch besser zeigt, trägt der Rotor 6 an seinem in die Trommel 14 ragenden Teil drei Flügel 5 zur Führung des Obstes 3 über die Innenfläche der Trommel 14 als Reissbett 15.

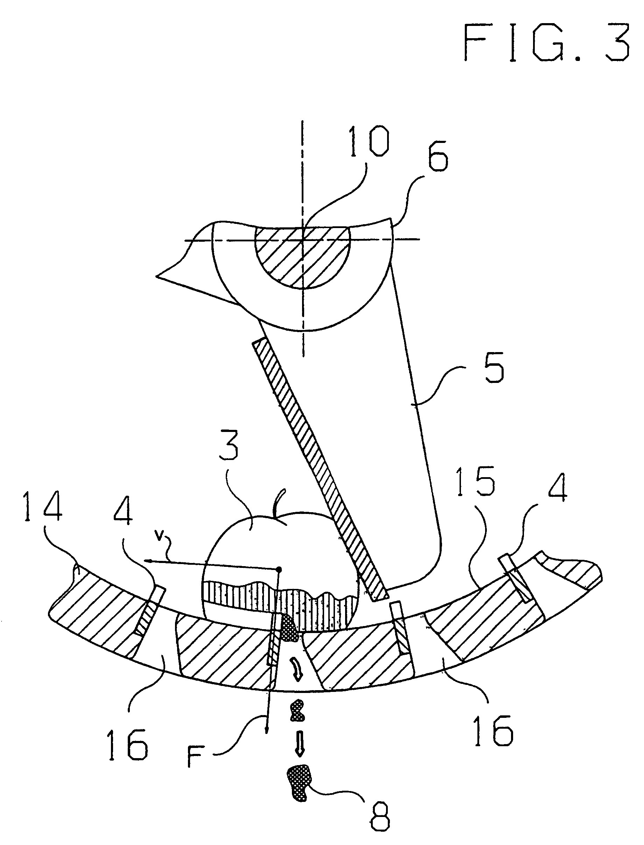

Wie Fig. la und 1b zeigen, sind in den unteren Teil des Reissbettes 15 eine Anzahl von Reissmessern 4 mit sägeförmiger Reisskante parallel zur Achse 10 eingesetzt. Wie das der Fig. 1b entsprechende Detail gemäss Fig. 3 zeigt, ist zwischen je zwei Reissmessern 4 ein Durchgang 16 als Abführkanal für von dem Obst 3 abgerissene zerkleinerte Maischeteile 8 angeordnet.

Im Gegensatz zur bekannten Bauart gemäss Fig. 2 erstrecken sich gemäss Fig. 3 die Abführkanäle 16 axial unmittelbar anschliessend an das jeweilige benachbarte Reissmesser 4. Man erkennt, dass das Obst 3 mit grosser Anpresskraft F über die Reissmesser 4 geschoben wird. Diese Bauart der Vorrichtung erlaubt ein unbehindertes Ausbrechen und Abstossen der abgerissenen ("abgerätzten") Maischeteilchen 8 aus der Frucht 3 in die Abführkanäle 16.

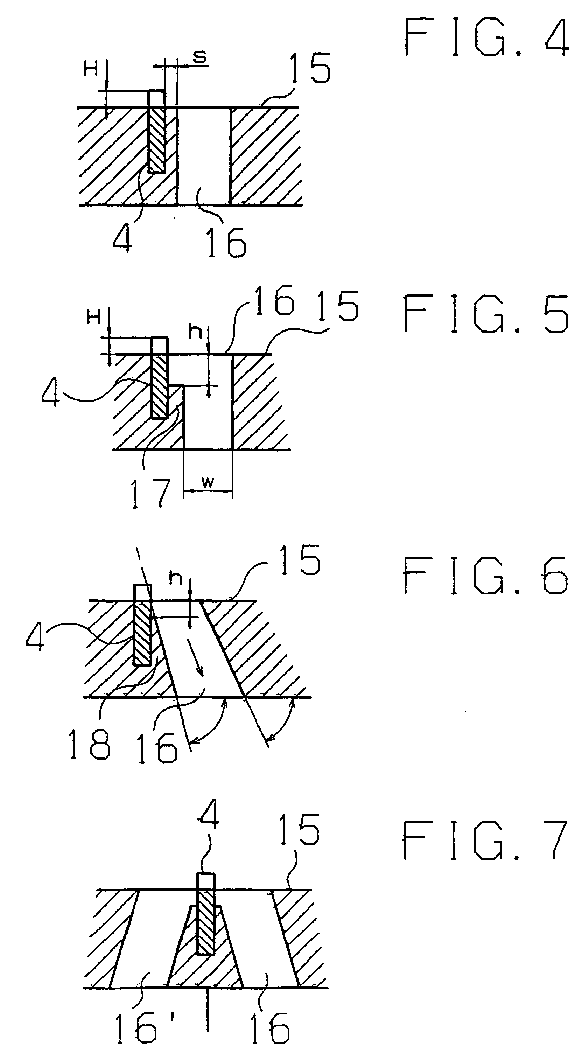

Eine Variante eines Abführkanals 16 als Durchgang durch das Reissbett 15 der Trommelmühle gemäss Fig. 3 zeigt Fig. 4. Hier ist zwischen dem Abführkanal 16 und dem benachbarten Reissmesser 4 ein Abstand s vorhanden. Die Vorteile der Ausführung gemäss Fig. 3 werden auch noch erzielt, solange der Abstand s nicht grosser ist als die Höhe H des Reissmessers 4 über der Oberfläche des Reissbettes 15.

Fig. 5 zeigt eine Variante des Abführkanals 16 gemäss Fig. 4, bei der eine Stützwand 17 zwischen dem Reissmesser 4 und dem Abführkanal 16 gegen die Oberfläche des Reissbettes 15 um eine Länge h abgesenkt ist. Dabei wird ein hinreichender Abfluss der Maischeteile 8 solange erzielt, wie die Absenkung h und die Weite w des Abführkanals 16 grösser sind als die Höhe H des Reissmessers 4 über der Oberfläche des Reissbettes 15.

Fig. 6 zeigt eine Variante des Abführkanals 16 gemäss Fig. 3, bei der sowohl eine Stützwand 18 zwischen dem Reissmesser 4 und dem Abführkanal 16 gegen die Oberfläche des Reissbettes 15 um eine Länge h abgesenkt ist, als auch der Abführkanal 16 sich in Durchgangsrichtung der zerkleinerten Früchte erweitert und vom benachbarten Reisselement 4 schräg ab verläuft. Auch hierbei wird eine gute Kombination des Abflusses der zerkleinerten Maischeteile 8 mit einer stabilen Halterung des Reissmessers 4 erreicht.

Fig. 7 zeigt eine Variante des Reissbettes 15 gemäss Fig. 3, bei der zwei Abflusskanäle 16 und 16' beidseitig unmittelbar an ein Reissmesser 4 anschliessen. Obwohl hierbei gegenüber der Ausführung gemäss Fig. 3 die doppelte Anzahl von Abflusskanälen erforderlich ist, bleibt doch der Vorteil der schonenden Maischebehandlung erhalten, auch wenn man im Falle einer einseitigen Abnutzung der Reissmesser 4 die Drehrichtung der drei Flügel 5 zur Führung des Obstes 3 über die Innenfläche der Trommel 14 umkehrt, um wieder einen scharfen Schnitt zu erreichen.

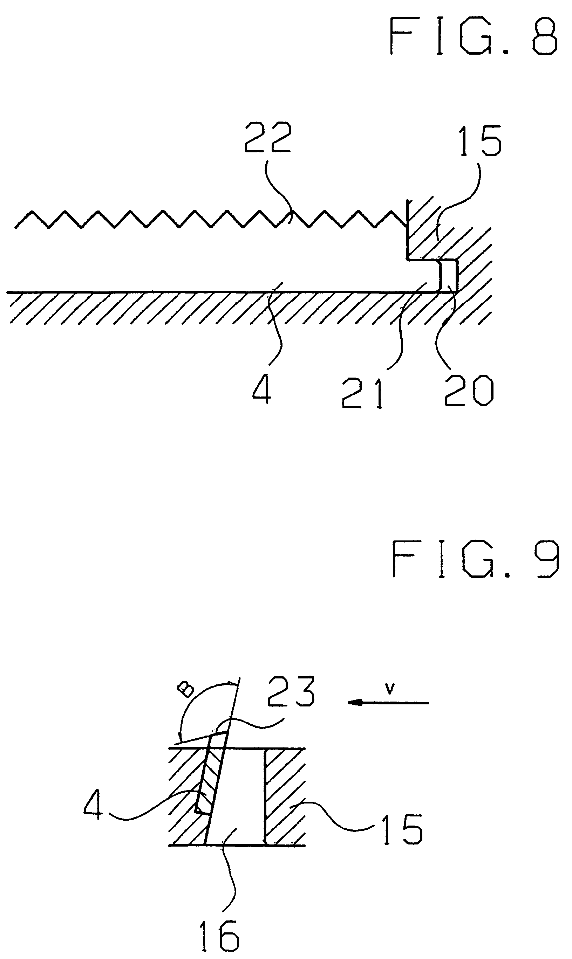

Wie oben schon erwähnt, erlaubt die Bauart gemäss Fig. la und 1b durch eine wählbare Höhe H der messerförmigen Reisselemente 4 über der Laufbahn des Reissbettes 15 eine direkte Beeinflussung der Maischestruktur. Die Höhe H kann man dadurch wählen, dass man auf der Oberfläche des Reissbettes 15 Nuten von passender Tiefe anordnet, in welche die messerförmigen Reisselemente 4 eingesetzt werden. Fig. 8 zeigt einen Längsschnitt durch eine derartige Nut 20, welche eine seitliche Einsenkung zur Halterung einer Nase 21 eines Reisselementes 4 aufweist. Die Reisskante des Reisselementes 4 ist in an sich bekannter Art mit einem Sägeprofil 22 versehen.

Die Reisselemente sind in an sich bekannter Art als Messer 4 ausgebildet. Fig. 9 zeigt eine vorteilhafte Anordnung eines solchen Messers 4, dessen Messerschneide 23 gegen die Richtung v der Zuführbewegung der zu zerreissenden Früchte mit der Wand des Abführkanales 16 geneigt ist und einen Schnittwinkel B grösser als 90 Grad aufweist. Auch durch diese Massnahme wird der Abfluss der zerkleinerten Früchte durch die Abführkanäle 16 verbessert.

Varianten von dem beschriebenen Aufbau und der Verwendung der Vorrichtung stehen dem Fachmann ohne weiteres zur Verfügung. Sie lässt sich bei an sich bekannten Reissmühlen trommelförmiger und auch tellerförmiger Ausbildung des Reissbettes verwenden. Bei einer tellerförmigen Ausbildung des Reissbettes sind die Durchgänge für die zerkleinerten Früchte mit Vorteil als radial verlaufende Nuten mit am Tellerumfang offenen Ausgängen ausgebildet. Wird die Relativbewegung zwischen den Reisselementen und den Zuführmitteln durch eine Rotation des Tellers erzeugt, so können die zerkleinerten Früchte einfach durch die Zentrifugalkräfte radial längs der Nuten abfliessen und von den Ausgängen am Tellerumfang abgeschleudert werden. Ein axialer Durchgang der Durchgänge im Reissbett ist in diesem Falle nicht erforderlich.

## Patentansprüche

1. Vorrichtung zum Zerreissen von Früchten, umfassend einen Ständer (11), ein in dem Ständer (11) gelagertes Reissbett (15) mit einer Oberfläche als Laufbahn für die Früchte (3), welche Reisselemente (4) und neben diesen Durchgänge (16) für die zerkleinerten Früchte (8) aufweist, wobei die Reisselemente (4) mit einer Höhe (H) über die Laufbahn hervorragen, sowie in dem Ständer (11) gelagerte Mittel zur Zuführung (5, 13, 33) der Früchte (3) zum Reissbett (15) und Antriebsmittel (12) zur Erzeugung einer Relativbewegung zwischen den Reisselementen (4) und Zuführmitteln (5) nebst den Früchten (3), **dadurch gekennzeichnet, dass** die Durchgänge (16) im Reissbett (15) für die zerkleinerten Früchte (8) in Richtung der Relativbewegung (v) gesehen vor den Reisselementen (4) in einem Abstand (s) angeordnet sind, welcher kleiner ist, als die Höhe (H) der Reisselemente (4) über der Laufbahn.

2. Vorrichtung nach Anspruch 1, **dadurch gekennzeichnet, dass** die den Durchgängen (16) zugewandten Flächen der Reisselemente (4) zumindest in dem Bereich, in welchem sie über die Laufbahn überstehen, im wesentlichen senkrecht zu der Richtung (v) der Zuführbewegung der Früchte (3) zu den Reisselementen (4) orientiert sind.

3. Vorrichtung nach einem der vorangehenden Ansprüche, **dadurch gekennzeichnet, dass** die Durchgänge (16) im Reissbett (15) direkt an die Reisselemente (4) anschliessen.

4. Vorrichtung nach einem der vorangehenden Ansprüche, **dadurch gekennzeichnet, dass** die Durchgänge (16) in Durchgangsrichtung der zerkleinerten Früchte (8) erweitert sind.

5. Vorrichtung nach einem der vorangehenden Ansprüche, **dadurch gekennzeichnet, dass** eine Stützwand (17) zwischen je einem Durchgang (16, 16') im Reissbett (15) und dem benachbarten Reisselement (4) unterhalb der Oberfläche der Laufbahn endet.

6. Vorrichtung nach einem der vorangehenden Ansprüche, **dadurch gekennzeichnet, dass** die Durchgänge (16) in Durchgangsrichtung der zerkleinerten Früchte (8) vom jeweiligen benachbarten Reisselement (4) schräg ab verlaufen.

7. Vorrichtung nach einem der vorangehenden Ansprüche, **dadurch gekennzeichnet, dass** auf beiden Seiten jedes Reisselementes (4) je ein Durchgang (16, 16') angeordnet ist.

8. Vorrichtung nach einem der vorangehenden Ansprüche 1 oder 3-7, **dadurch gekennzeichnet, dass** die Reisselemente als Messer (4) ausgebildet sind, wobei die Messerschneiden (23) gegen die Richtung (v) der Zuführbewegung der Früchte geneigt sind und die Messerschneiden (23) einen Schnittwinkel (B) grösser als 90 Grad aufweisen.

9. Vorrichtung nach einem der vorangehenden Ansprüche, **dadurch gekennzeichnet, dass** auf der Oberfläche des Reissbettes Nuten (20) angeordnet sind, in welche messerförmige Reisselemente (4) mit einer wählbaren Höhe (H) über der Laufbahn des Reissbettes (15) eingesetzt werden können.

10. Vorrichtung nach einem der vorangehenden Ansprüche, **dadurch gekennzeichnet, dass** das Reissbett (15) die Form einer Trommel (14) hat, auf deren innerer Oberfläche sich die Laufbahn mit den Reisselementen (4) befindet.

11. Vorrichtung nach einem der Ansprüche 1 bis 9, **dadurch gekennzeichnet, dass** das Reissbett die Form eines Tellers mit einer Stirnseite hat, wobei sich die Laufbahn mit den Reisselementen auf der Stirnseite befindet.

## Claims

1. Device for shredding fruits, including a stand (11), a shredding bed (15) mounted in the stand (11) with a surface serving as a track for the fruits (3) and comprising shredding elements (4) and, alongside them, passages (16) for the ground fruits (8), the shredding elements (4) projecting above the track to a height (H), as well as means mounted in the stand (11) for feeding (5, 13, 33) the fruits (3) to the shredding bed (15) and drive means (12) for generating a relative movement between the shredding elements (4) and the feed means (5) together with the fruits (3), **characterised in that** the passages (16) in the shredding bed (15) for the ground fruits (8) are arranged upstream of the shredding elements (4) as viewed in the direction of the relative. movement (v) at a distance (s) shorter than the height (H) of the shredding elements (4) above the track.

2. Device according to claim 1, **characterised in that** the surfaces of the shredding elements (4) directed towards the passages (16) are oriented substantially perpendicularly to the direction (v) of the feed movement of the fruits (3) towards the shredding elements (4) at least in the region in which they project above the track.

3. Device according to one of the preceding claims, **characterised in that** the passages (16) in the shredding bed (15) are directly connected to the shredding elements (4).

4. Device according to one of the preceding claims, **characterised in that** the passages (16) are expanded in the direction of travel of the ground fruits (8).

5. Device according to one of the preceding claims, **characterised in that** respective supporting walls (17) between each passage (16, 16') in the shredding bed (15) and the adjacent shredding element (4) end below the surface of the track.

6. Device according to one of the preceding claims, **characterised in that** the passages (16) extend at an incline away from the respective adjacent shredding element (4) in the direction of travel of the ground fruits (8).

7. Device according to one of the preceding claims, **characterised in that** respective passages (16, 16') are arranged on either side of each shredding element (4).

8. Device according to one of the preceding claims 1 or 3, **characterised in that** the shredding elements are in the form of knives (4), the cutting edges (23) being inclined in the direction (v) of the feed movement of the fruits and the cutting edges (23) having a cutting angle (B) greater than 90 degrees.

9. Device according to one of the preceding claims, **characterised in that** grooves (20) into which knife-type shredding elements (4) can be inserted at a selectable height (H) above the track of the shredding bed (15) are arranged on the surface of the shredding bed.

10. Device according to one of the preceding claims, **characterised in that** the shredding bed (15) is in the form of a drum (14), on the inner surface of which the track with the shredding elements (4) is situated.

11. Device according to one of claims 1 to 9, **characterised in that** the shredding bed is in the form of a disc with an end face, the track with the shredding elements being situated on the end face.

## Revendications

1. Dispositif destiné à broyer des fruits, comprenant un bâti d'assise (11) ; un châssis de broyage (15) monté dans ledit bâti d'assise (11) et doté d'une surface qui matérialise une piste de mouvement affectée aux fruits (3), comportant des éléments broyeurs (4) et, à côté de ces derniers, des passages (16) destinés aux fruits (8) fragmentés, lesdits éléments broyeurs (4) dépassant d'une certaine hauteur (H) au-delà de la piste de mouvement ; ainsi que des moyens montés dans le bâti d'assise (11), en vue de l'amenée (5, 13, 33) des fruits (3) jusqu'au châssis de broyage (15), et des moyens d'entraînement (12) pour engendrer un mouvement relatif entre lesdits éléments broyeurs (4) et les moyens d'amenée (5), conjointement aux fruits (3), **caractérisé par le fait que** les passages (16), ménagés dans le châssis de broyage (15) pour les fruits (8) fragmentés, sont disposés avant les éléments broyeurs (4) observés dans la direction du mouvement relatif (v), à une distance (s) plus petite que la hauteur (H) desdits éléments broyeurs (4) au-dessus de la piste de mouvement.

2. Dispositif selon la revendication 1, **caractérisé par le fait que** les surfaces des éléments broyeurs (4) qui sont tournées vers les passages (16) sont orientées, au moins dans la région dans laquelle lesdits éléments dépassent au-delà de la piste de mouvement, pour l'essentiel perpendiculairement à la direction (v) du mouvement d'amenée des fruits (3) vers lesdits éléments broyeurs (4).

3. Dispositif selon l'une des revendications précédentes, **caractérisé par le fait que** les passages (16), ménagés dans le châssis de broyage (15), se raccordent directement aux éléments broyeurs (4).

4. Dispositif selon l'une des revendications précédentes, **caractérisé par le fait que** les passages (16) sont élargis dans la direction de défilement des fruits (8) fragmentés.

5. Dispositif selon l'une des révendications précédentes, **caractérisé par le fait qu'**une paroi d'appui (17) située entre un passage respectif (16, 16') ménagé dans le châssis de broyage (15), et l'élément broyeur (4) voisin, s'achève au-dessous de la surface de la piste de mouvement.

6. Dispositif selon l'une des revendications précédentes, **caractérisé par le fait que** les passages (16) s'étendent, dans la direction de défilement des fruits (8) fragmentés, à l'oblique vers le bas à partir de l'élément broyeur (4) respectivement voisin.

7. Dispositif selon l'une des revendications précédentes, **caractérisé par le fait qu'**un passage respectif (16, 16') est situé des deux côtés de chaque élément broyeur (4).

8. Dispositif selon l'une des revendications précédentes 1 ou 3 - 7, **caractérisé par le fait que** les éléments broyeurs sont réalisés sous la forme de couteaux (4), les tranchants (23) desdits couteaux étant inclinés vers la direction (v) du mouvement d'amenée des fruits, et lesdits tranchants (23) des couteaux présentant un angle de coupe (B) supérieur à 90 degrés.

9. Dispositif selon l'une des revendications précédentes, **caractérisé par le fait que** la surface du châssis de broyage comporte des rainures (20) dans lesquelles peuvent être insérés des éléments broyeurs (4) en forme de couteaux, présentant une hauteur sélectionnable (H) au-dessus de la piste de mouvement dudit châssis de broyage (15).

10. Dispositif selon l'une des revendications précédentes, **caractérisé par le fait que** le châssis de broyage (15) revêt la forme d'un tambour (14) sur la face intérieure duquel se trouve la piste de mouvement munie des éléments broyeurs (4).

11. Dispositif selon l'une des revendications 1 à 9, **caractérisé par le fait que** le châssis de broyage revêt la forme d'une cuvette présentant une face frontale, la piste de mouvement, munie des éléments broyeurs, étant située sur ladite face frontale.
